# EUROPEAN PATENT APPLICATION

(11) **EP 2 590 085 A1**
(43) Date of publication of application: **08.05.2013**
(21) Application number: 11187559.7
(22) Date of filing: 02.11.2011
(51) Int. Cl.: G06F 13/40

(54) **Controller host interface for a FlexRay communication controller**

(71) Applicant: Renesas Electronics Europe Limited, Bourne End, Buckinghamshire SL8 5XF (GB)
(72) Inventor: Hoffleit, Thorsten, 40472 Duesseldorf (DE); Mardmoeller, Christian, 40472 Duesseldorf (DE)
(74) Representative: Piotrowicz, Pawel Jan Andrzej

(57) **Abstract**

A controller host interface (23, 24) for a FlexRay communication controller (22) is described. The controller host interface is configured to use a data structure (2₁') which comprises configuration data specifying parameters defining a buffer (2'). The configuration data includes a parameter (29) identifying that the buffer is a symbol buffer or a synchronization frame information buffer.

## Description

The present invention relates to a controller host interface for a FlexRay communication controller.

A control unit having a microcontroller can exchange data with another control unit using a serial protocol. In the control unit, communication modules control the exchange of data between a serial interface and memory. The information stored in memory is typically processed by application software running on a processor in the microcontroller.

An example of such a control unit is an electronic control unit (ECU) having a FlexRay microcontroller.

Communication modules in semiconductor devices can use a buffered interface to exchange communication data, i.e. receive data and transmit data, between the communication module and the processor. In addition to storing the communication data, buffers can also store buffer-related configuration and status information to inform the communication module and the processor how and when to process the data.

Communication modules also exchange information with the processor other than communication data. Such information, for example general configuration and communication status data, is usually stored in a special function register (SFR) area of the communication module and can be accessed directly by the processor.

According to a first aspect of the present invention there is provided a controller host interface for a FlexRay communication controller, the controller host interface configured to use a data structure which comprises configuration data specifying parameters defining a buffer, the configuration data including a parameter identifying that the buffer is a symbol buffer or a synchronisation frame information buffer. A symbol buffer is used to control transmission of symbols, such as WUDOP and WTS. A synchronisation frame information buffer is used to store synchronisation frame information status.

Thus, buffers can be used which can be configured not only as either a (non-queued) receive buffer which holds frame content data or a (non-queued) transmit buffer which holds payload data, but also alternatively as a symbol buffer or a synchronisation frame information buffer. This can help to simplify the communication controller since the same logic can be used to handle frames, symbols and synchronisation frame information. This can also help to provide a common access scheme to receive/transmit buffers, symbol buffers and synchronisation frame data for a host.

The controller host interface may comprise a circuit configured to use the data structure. The circuit can access buffer memory.

The controller host interface may comprise means for receiving a set of parameters for writing into the buffer, means for determining that the set of parameters are to be written into the buffer and means for writing the set of parameters into the buffer, including the parameter identifying that the buffer is a symbol buffer or a synchronisation frame information buffer. The controller host interface may comprise a circuit configured to receive a set of parameters for writing into the buffer, to determine that the set of parameters are to be written into the buffer and to write the set of parameters into the buffer, including the parameter identifying that the buffer is a symbol buffer or a synchronisation frame information buffer.

The parameter identifying that the buffer is a symbol buffer or synchronisation frame information buffer may be a buffer role (or "buffer type") parameter for identifying one of a plurality of buffer types. The buffer types may include receive buffer, transmit buffer, symbol transmission buffer and/or frame synchronisation information buffer. The buffer type can identify buffer types other than receive and transmit buffer types. The parameter may comprise at least two bits, for example, two, three or four bits.

The parameter identifying that the buffer is a symbol buffer may be a slot number, the slot number set to a value for indicating that the buffer is a symbol buffer. The value may be zero.

Two different parameters may be used for identifying that the buffer is a symbol buffer, such as the buffer type parameter and a slot number.

The controller host interface may comprise means for searching buffer configuration data of a set of buffers, means for determining whether the buffer is a symbol buffer in dependence upon said parameter identifying that the buffer is a symbol buffer and means for causing transmitting of a symbol in accordance with the symbol buffer. The controller host interface may comprise a circuit configured to search buffer configuration data of a set of buffers, to determine whether a buffer is a symbol buffer in dependence upon said parameter identifying that the buffer is a symbol buffer and to cause transmitting of a symbol in accordance with the symbol buffer. The set of buffers may include at least one symbol buffer and at least one transmit and/or receive buffer.

According to a second aspect of the present invention there is provided a FlexRay communications controller comprising a controller host interface according to any preceding claim and a FlexRay protocol controller.

According to a third aspect of the present invention there is provided a microcontroller comprising the communications controller and at least one central processing unit (CPU). Message memory (or at least part of message memory) may be within or outside the communications controller. Message memory (or at least part of message memory) may be outside the microcontroller.

According to a fourth aspect of the present invention there is provided a method of controlling buffers by a controller host interface of a FlexRay communications controller, the method comprising using a data structure which comprises configuration data specifying parameters defining a buffer, the configuration data including a parameter identifying that the buffer is a symbol buffer or a synchronisation buffer. The method may be a hardware-implemented method.

The method may comprise receiving a set of parameters for writing into the buffer, determining that the set of parameters are to be written into the buffer and writing the set of parameters into the buffer, including the parameter identifying that the buffer is a symbol buffer or synchronisation frame information buffer.

The parameter identifying that the buffer is a symbol buffer or synchronisation frame information buffer may be a buffer type parameter for identifying one of a plurality of buffer types. The buffer types may include receive buffer, transmit buffer, symbol transmission buffer and frame synchronisation information buffer. The buffer type can identify buffer types other than receive and transmit buffer types. The parameter may comprise at least two bits, for example, two, three or four bits.

The parameter identifying that the buffer may be a symbol buffer is a slot number said slot number set to a value for indicating that the buffer is a symbol buffer. The value may be zero.

Two different parameters may be used for identifying that the buffer is a symbol buffer, such as the buffer type parameter and a slot number.

The method may comprise searching buffer configuration data of a set of buffers, determining whether the buffer is a symbol buffer in dependence upon said parameter identifying that the buffer is a symbol buffer, and causing transmitting of a symbol in accordance with the symbol buffer. The set of buffers may include at least one symbol buffer and at least one transmit and/or receive buffer.

According to a fifth aspect of the present invention there is provided a data structure for use by a controller host interface of a FlexRay communication controller comprising configuration data specifying parameters defining a buffer, the configuration data including a parameter identifying that the buffer is a symbol buffer or a synchronisation frame information buffer.

The parameter identifying that the buffer is a symbol buffer or synchronisation frame information buffer may be a buffer type parameter for identifying one of a plurality of buffer types. The buffer types may include receive buffer, transmit buffer, symbol transmission buffer and frame synchronisation information buffer.

The parameter identifying that the buffer is a symbol buffer may be a slot number, said slot number set to a value for indicating that the buffer is a symbol buffer. The value is zero.

Two different parameters may be used for identifying that the buffer is a symbol buffer, such as the buffer type parameter and a slot number.

The configuration data may further include a parameter identifying a channel and a parameter identifying a communications cycle which includes a segment for data exchange and a segment for extended information exchange.

According to a sixth aspect of the present invention there is provided a FlexRay communications controller configured to provide a unified buffer interface for handling frames and symbols and, optionally, synchronisation frame information.

Certain embodiments of the present invention will now be described, by way of example, with reference to the accompanying drawings, in which:
Figure 1 is a schematic block diagram of a microcontroller which includes a communication controller in which symbol and frame processing use different access schemes;
Figure 2 illustrates a set of communication cycles, segments within a communication cycle and slots within certain segments of the communication cycle;
Figure 3 is a schematic block diagram of a microcontroller which includes a communication controller in which symbol and frame processing are carried out in accordance with the present invention;
Figure 4 illustrates sets of buffer configuration parameters for different buffer roles;
Figure 5 is a process flow diagram of a method of writing data to symbol buffer configuration data;
Figure 6 illustrates export of slot status information (vSS) and received frame (vRF);
Figure 7 illustrates triggers at slot boundaries and symbol window boundaries when vSS and vRF are expected by a FlexRay protocol controller;
Figure 8 is a process flow diagram of a method of reading symbol buffer configuration data;
Figure 9 is a process flow diagram of a method of writing data to synchronisation frame information buffer configuration data; and
Figure 10 is a process flow diagram of a method of writing synchronisation frame information into a synchronisation frame information buffer.

In the following description, like parts are denoted by like reference numerals.

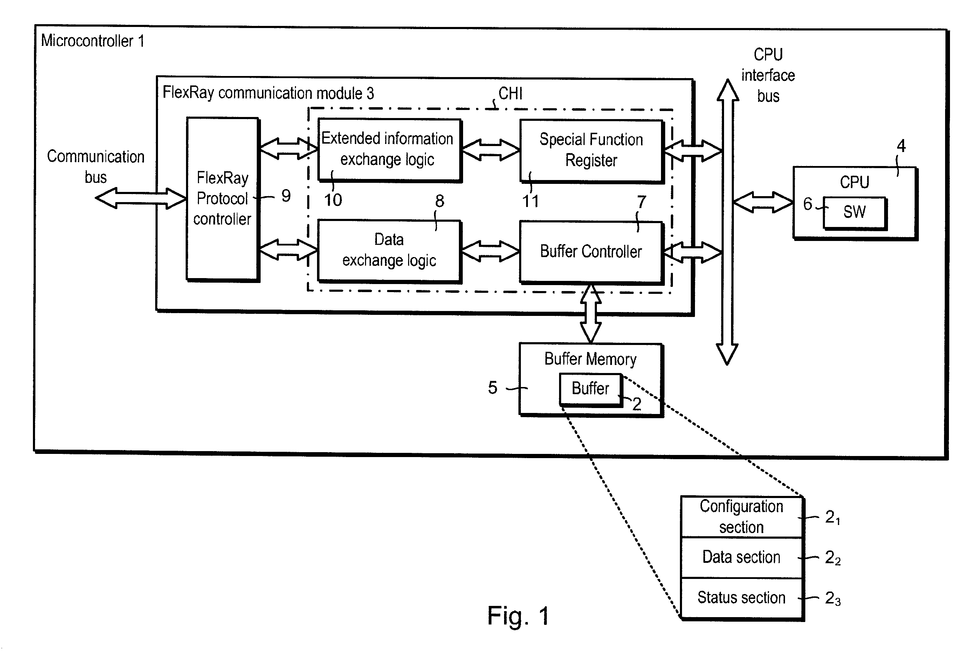

Figure 1 shows a FlexRay microcontroller 1.

Buffers 2 are used to exchange receive and transmit data between a communication module 3 and a central processing unit (CPU) 4 (hereinafter referred to as a "processor"). Such a process involving the exchange of receive and transmit data is herein referred to as "data exchange". Dedicated interfaces are defined to exchange information other than receive and transmit data. Such a process involving the exchange of information other than receive and transmit data is herein referred to as "extended information exchange".

The buffers 2 used for data exchange can have a configurable buffer role, i.e. either as a receive buffer or a transmit buffer, to allow a flexible, application-dependent allocation of the available buffer resources.

Buffer content includes a configuration section 2₁ which describes how and when a buffer should be used, a data section 2₂ in which receive or transmit data is stored and a status section 2₃ in which buffer-related status information is stored, such as availability of data section or protocol-specific status information. The buffer content is stored in buffer memory 5. Buffer memory 5 can be embedded in the communication module 3, implemented as random access memory (RAM) or special function register (SFR), and/or shared with other memory inside the control unit (not shown).

The buffers 2 provide application software 6 with an effective and decoupled interface to the communication module 3. More than one buffer 2 can be provided by the communication module 3. In Figure 1, only one buffer 2 is shown for clarity. The buffers 2 can be structured to simplify re-use of logic in the communication module 3, for example for individual filter functions.

The buffers 2 are handled by a buffer controller 7 which is part of the communication module 3. Buffer content is stored in the buffer memory 5 to which the buffer controller 7 has access. The buffer controller 7 controls access to the buffer memory 5 on the processor side.

For extended information exchange, a dedicated special function register 11 in the communication module 3, together with application software 6 running on the processor 4, is used.

FlexRay requires that a communication controller (CC) is able to handle different communication elements such as FlexRay frames and FlexRay symbols, namely media access test symbol (MTS) and wake up during operation pattern (WUDOP).

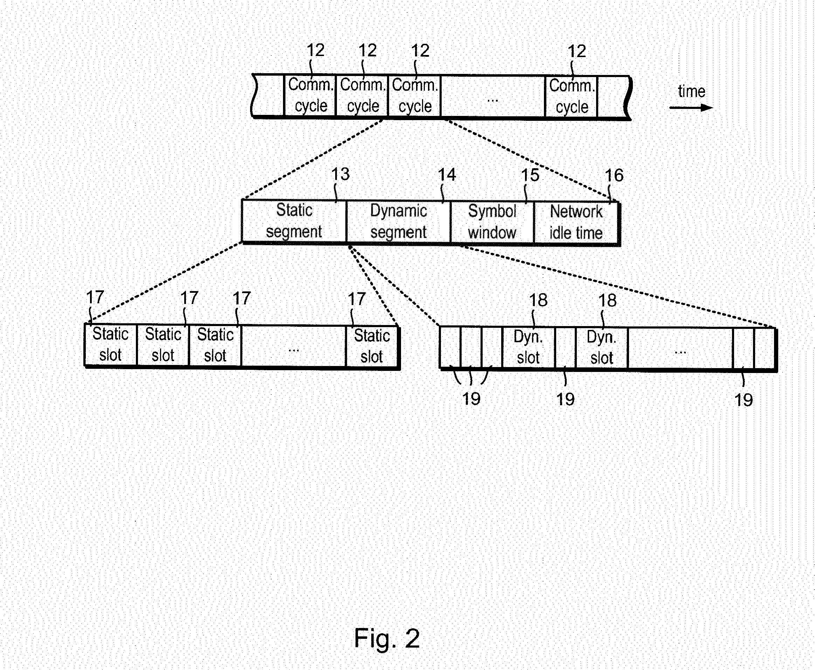

Referring also to Figure 2, FlexRay is a time-driven protocol, according to which each reception and transmission of communication elements is assigned to a dedicated part of a communication cycle 12. A communication cycle 12 includes static and dynamic segments 13, 14, a symbol window 15 and network idle time 16. The static and dynamic segments 13, 14 are split into a number of slots 17, 18, 19 which are reserved for communication using FlexRay frames. The symbol window 15 is reserved for communication using FlexRay symbols. During network idle time 16, no bus activity should happen. A FlexRay communication controller uses a buffer interface to handle FlexRay frames (i.e. for data exchange) and a special function register interface to handle FlexRay symbols (i.e. for extended information exchange).

FlexRay requires a defined functionality for the buffers used to handle data exchange function. This includes information to be provided by the process, such as configuration and status information, and a scheme as to how a buffer is selected for use. For buffer selection, a set of parameters are evaluated, namely a type indication (i.e. receive or transmit buffer), a channel identifier, a cycle identifier, a slot identifier and a transmission mode indicator (i.e. single-shot or continuous mode) which is only used for transmit buffers.

Data exchange logic 8 is used, among other things, to provide an assignment list check function which determines, from the buffer configuration and the FlexRay protocol state, the buffer to be used. Additionally, the data exchange logic 8 provides an interface between a protocol controller 9, which implements a protocol engine, and the buffer controller 7 to handle frame reception and transmission and to provide the required status information.

FlexRay requires, for symbol transmission, a set of parameters defining when and which type of symbol should be transmitted. For this, the following parameters are evaluated, namely a symbol type indication (i.e. MTS or WUDOP), a channel identifier, a cycle identifier, which is only required for WUDOP, and a transmission mode indicator (i.e. single-shot or continuous mode) which is only required for WUDOP.

Extended information exchange logic 10 provides an assignment check function, which derives from the symbol configuration and the FlexRay protocol state if and which symbol type has to be transmitted. Additionally, the extended information exchange logic 10 provides an interface between the FlexRay protocol controller 9 and special function register 11 to handle symbol transmission and to provide the required status information.

As shown in Figure 1, in the FlexRay communication controller 3, symbol and frame processing use different access schemes. Thus, different sets of communication controller logic are used to implement different interface schemes for symbols and frames. The application software 6 handles different access interfaces for symbols and frames. Due to the defined communication phases within a communication cycle 12, frame and symbol communication cannot occur at the same time. Also, the resources for symbol and frame processing are not used at the same time.

In accordance with the present invention, a unified buffer interface can be used to handle FlexRay symbols and FlexRay frames which can help to optimise implementation and provide a common access scheme for the application software. The unified buffer interface can also be used to handle storage of FlexRay synchronization frame information.

By defining additional buffer roles, the buffer interface can be expanded to handle extended information exchange as well as data exchange. The use of buffers for extended information exchange allows the use of logic which is required for data exchange for extended information exchange. By using the same buffer interface, the buffer resources required for data exchange or extended information exchange can be allocated flexibly and can be allocated dependent on the application. The number of processing schemes on the communication module side and processor side can be reduced.

When using FlexRay as a serial communication protocol, there are common criteria for symbol and frame transmission, namely channel and cycle identifier, transmission mode and phase of the FlexRay communication cycle (slots for frame based communication, symbol window for symbol based communication). When integrating symbol transmission handling with data exchange, resources can be shared and a single processor interface can be provided.

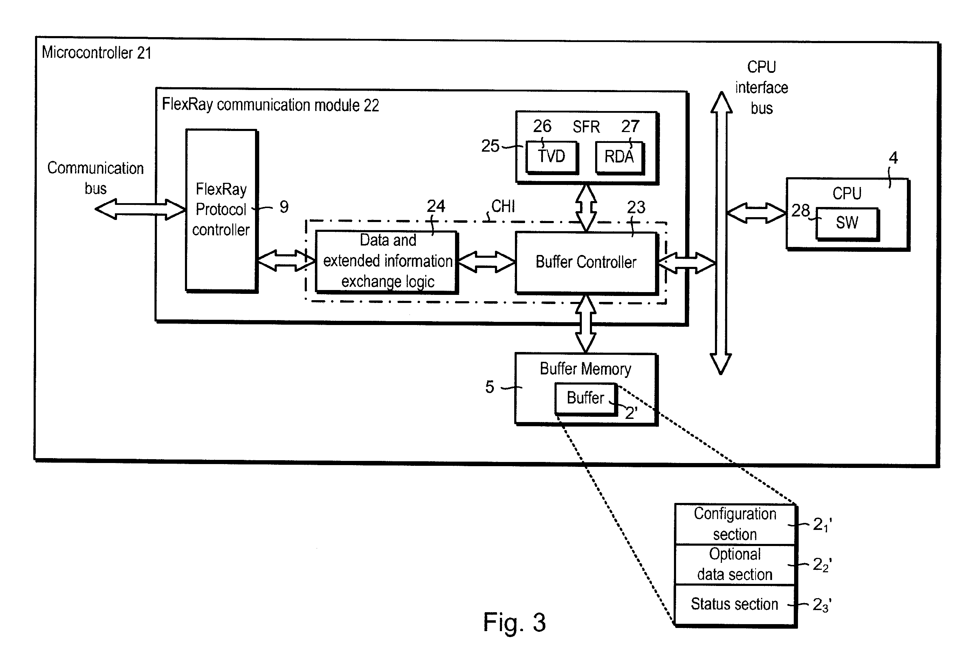

Figure 3 shows a microcontroller 21 having a FlexRay communication controller 22 in which symbol processing is included in the buffer controller 23. The communication controller 22 also includes data and extended information exchange logic 24 which provides, among other things, frame assignment and symbol check functionality. The communication controller 22 includes a special functional register 25 which holds, among other things, first and second flags 26, 27. The processor 4 executes application software 28.

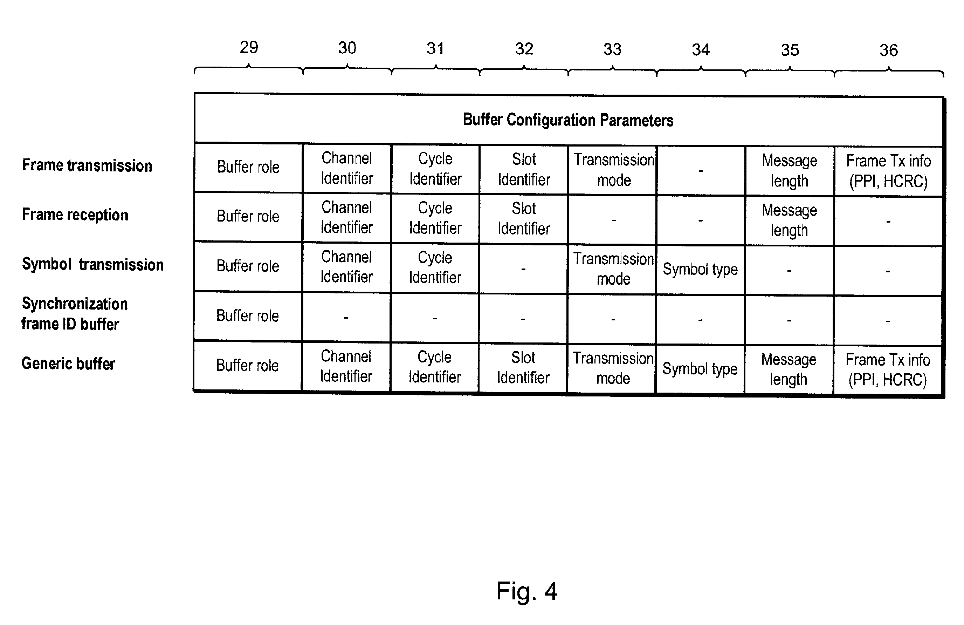

Figure 4 shows different arrangements of buffer configuration data 2₂' for different buffer roles. The buffer configuration data 2₂' includes a plurality of parameters 29, 30, 31, 32, 33, 34, 35, 36. The buffer configuration data 2₂' include a buffer role field 29, a channel identifier field 30, a cycle identifier field 31, a slot identifier field 33, a symbol type field 34, a message length field 35 and a frame transmission information field 36.

As shown in Figure 4, for the buffer role 'symbol transmission', a configuration parameter 'symbol type' 34 is used. This can specify the type of symbol to be transmitted, namely MTS or WUDOP. Also, the mechanism used to control single-shot and continuous frame transmission can be used for symbol transmission. In the case of frame transmission, a 'data available indication' flag 26 (Figure 3) can be used to specify if a transmit buffer should be used for active data transmission. In the case of symbol transmission, this indicator 26 (Figure 3) can be used to define whether a symbol buffer should be used for active symbol transmission.

FlexRay requires a set of status information for receive and for transmit buffers, as well as for the symbol transmission. The symbol-related status information, such as the symbol window related vSS, can be stored in the buffer 2' used for symbol transmission (i.e. the buffer 2' is used as symbol buffer) or in special function registers 25 or both. By extending the buffer status by a symbol send information, similar to vSS!FrameSend as defined for frame transmission, consistent use of transmission flags in the buffer 2' can be achieved.

According to the slot status information (i.e. slot-related vSS variables) defined for receive/transmit buffers, the symbol buffers can handle the symbol window related status information (i.e. symbol-related vSS variables). An implementation can also additionally provide the symbol window status in dedicated special function register 25. If the symbol-related slot status is extended by media access test symbol (MTS) and wake up during operation (WUDOP) received indications, it is also possible to implement symbol receive buffers. In such cases, the indication of 'new received data available' flag 27 can be used for symbol reception.

The requirements of symbol and frame handling are similar to those specified by FlexRay. By expanding the existing function of the buffer controller 23 required for frame handling, the buffer controller 23 acquires the capability to handle symbols. Thus, there is no longer a need for dedicated logic 10 (Figure 1) in the communication module 3 (Figure 1). By using a buffered interface handling frames and symbols, the application software 28 is provided with a single, common interface. Software functions supporting a dedicated symbol interface are no longer required.

By defining additional buffer roles, the buffer controller 23 can also be used to provide status information related to the network idle time (i.e. NIT-related vSS).

By defining additional buffer roles, the buffer controller 23 can also be used if a communication module 22 has to provide status information to the processor 4. In this case, the use of buffers 2' allows reduction in the complexity of the special function registers 25. Status information can be stored in buffer memory 5 and be accessed by the processor 4.

According to the FlexRay protocol, a FlexRay communication controller should provide each communication cycle 12 with synchronisation frame status information (not shown). In the microcontroller 1 shown in Figure 1, this information would be stored in the special function register 11 for access by the processor 4. By adding an addition buffer role, the buffer 2' can also be used to provide a common interface for the synchronisation frame status. Using the 'data available' flag 27 (Figure 3) as used for receive buffers, the processor 4 is informed when the new status information is available.

Referring to Figures 3, 4 and 5, a method of writing to the symbol buffer is shown.

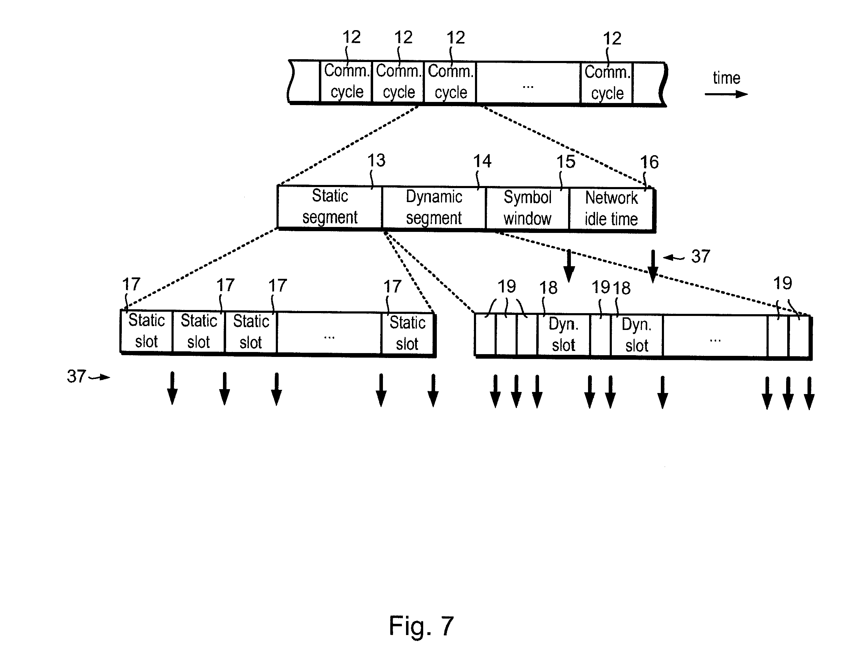

The buffer controller 23 receives a request from the application software 28 to configure a symbol buffer to request transmission of symbols (for example, MTS or WUDOP) within the symbol window 15 (Figure 7) (step S5.1). The buffer controller 23 determines whether the information can be written to symbol buffer (step S5.2). If so, the buffer controller 23 writes the information into buffer configuration data 2₁' setting the buffer role parameter 29 to a value indicating that the buffer is symbol buffer (step S5.3). Optionally, the slot identifier 32 may be set to '0x000'. For frame transmission and frame reception, a non-zero slot number can be set, for example, in the range 0x001 to 0x7FF. The buffer controller 23 updates buffer status data (step S5.4).

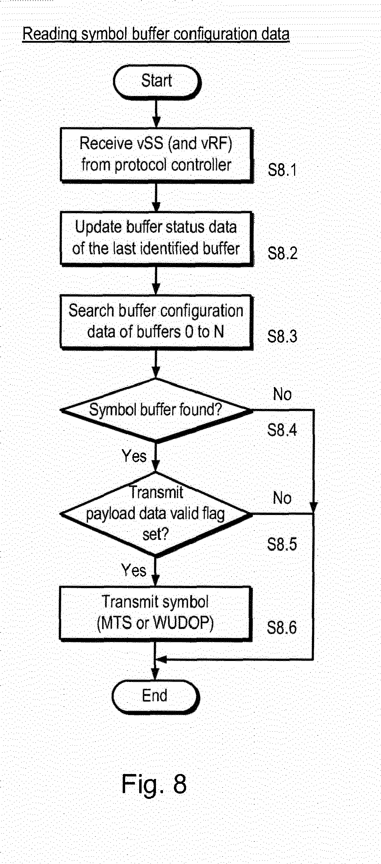

Referring to Figures 3, 4 and 6, 7 and 8, a method of reading from the symbol buffer is shown.

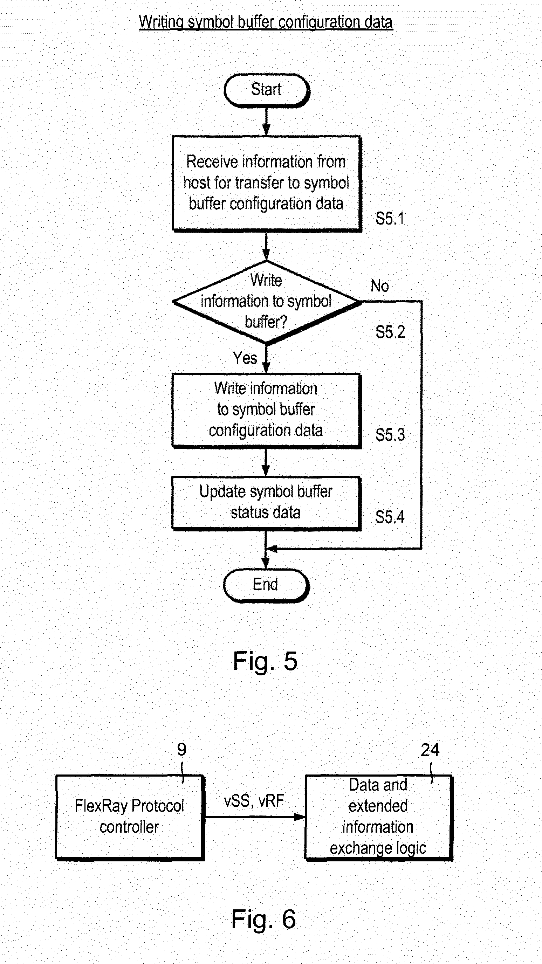

Boundaries of the symbol window 15 and network idle time 16, and boundaries of slots 17, 18, 19 generate triggers 37. Start of a slot triggers selection of a buffer and the selected buffer is later used, for example, for storage. The triggers 37 cause the export, by the protocol controller 9, of slot status information (vSS) and, in the case of slots 17, 18, 19, received frame information (vRF). As shown in Figure 6, this is exported to common data exchange and extended information logic 24.

In response to a trigger 37 at a start of a slot, the buffer controller 23 updates the buffer status data (step S8.2) and searches buffer configuration data 2₁' of all the buffers 2' to identity a symbol buffer candidate from transmit buffer, receive buffer, symbol buffer and, optionally, synchronization frame information buffer candidates (steps S8.3 & S8.4). Symbol buffer candidates are identified by inspecting the buffer mode field 32. During a symbol window 15, a symbol buffer candidate may or may not be found. Outside a symbol window 15, a symbol buffer candidate will normally not be found.

The buffer controller 23 checks whether the transmit payload valid data flag is set which indicates whether a symbol should be transmitted (step S8.5). If the flag is set and if the window for symbol transmission is open, the buffer controller 23 signals to the protocol controller 9 that a symbol of the type identified in the symbol type field 34 should be transmitted (steps S8.6).

During a communications cycle 12 (Figure 7), synchronisation frame data is collected. The buffer controller 23 can be used to store a list containing the IDs of the synchronization frames received or transmitted on channel A/ B in the even/ odd communication cycles, as well as the number of valid entries in each list.

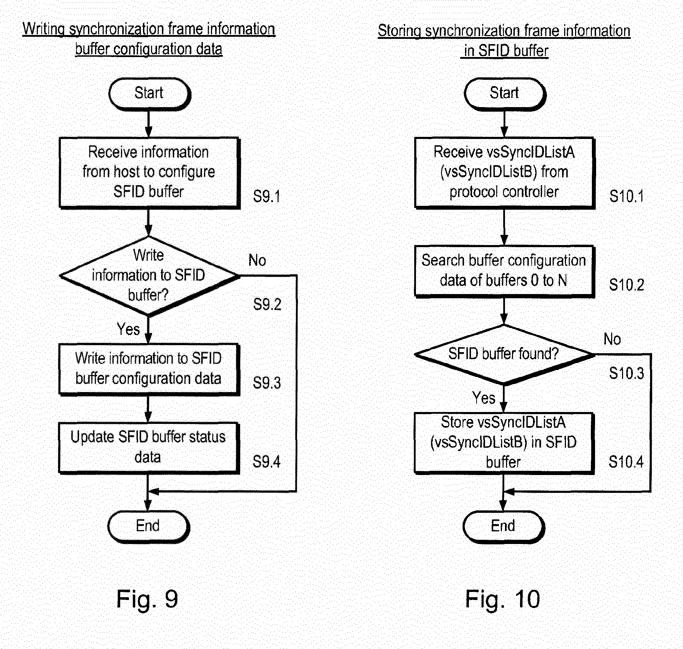

Referring to Figures 3, 4, 7 and 9, a method of configuring a synchronization frame information buffer is shown.

The buffer controller 23 receives a request from the application software 28 to configure a synchronization frame information buffer (herein also referred to as the "SFID buffer") for storing synchronization frame information (step S9.1). The buffer controller 23 determines whether the information can be written to synchronization frame information buffer (step S9.2). If so, the buffer controller 23 writes the information into buffer configuration data 2₁' setting the buffer role parameter 29 to a value indicating that the buffer is a synchronization frame information buffer (step S9.3). The buffer controller 23 updates buffer status data (step S9.4).

In this way, a buffer 2' is configured as a synchronization frame information buffer which can be used to store synchronization frame information, e.g. vsSyncIDListA[0] and vsSyncIDListB[0] to vsSyncIDListA[N] and vsSyncIDListB[N] (where N = 14) and list length information. Preferably there is only one synchronization frame information buffer.

Referring to Figures 3, 4, 7 and 10, a method of updating synchronization frame information is shown.

The update normally takes place as soon as possible after the start of NIT window 16 (Figure 7). The buffer controller 23 receives synchronization frame information status (vsSyncIDListA/B) from the protocol controller 9 (step S10.1). The buffer controller 23 searches buffer configuration data of the buffers to identify a synchronization frame information buffer and stores the synchronization frame information in the buffer (steps S10.2 to S 10.4).

The application software 28 can access the synchronization frame information buffer, if required.

It will be appreciated that many modifications may be made to the embodiments hereinbefore described.

For example, all or part of the buffer memory may take the form of a special function register.

The buffer role can define other types of buffer (i.e. other than a receive buffer, a transmit buffer, a symbol buffer and a synchronisation frame ID buffer) which controls reception and/or transmission of or storage of data other than data exchange data (i.e. receive or transmit data).

## Claims

1. A controller host interface for a FlexRay communication controller, the controller host interface configured to use a data structure which comprises configuration data specifying parameters defining a buffer, the configuration data including a parameter identifying that the buffer is a symbol buffer or a synchronization frame information buffer.

2. A controller host interface according to claim 1, comprising:
means for receiving a set of parameters for writing into the buffer;
means for determining that the set of parameters are to be written into the buffer; and
means for writing the set of parameters into the buffer, including the parameter identifying that the buffer is a symbol buffer or a synchronization frame information buffer.

3. A controller host interface according to claim 1, comprising:
a circuit configured to receive a set of parameters for writing into the buffer, to determine that the set of parameters are to be written into the buffer and to write the set of parameters into the buffer, including the parameter identifying that the buffer is a symbol buffer or a synchronization frame information buffer.

4. A controller host interface according to claim 2 or 3, wherein the parameter identifying that the buffer is a symbol buffer is a buffer role parameter which is configurable to identify that the buffer is a transmit buffer, a receive buffer or a symbol buffer and/or a synchronisation frame information.

5. A controller host interface according to any one of claims 1 to 4, comprising:
means for searching buffer configuration data of a set of buffers;
means for determining whether the buffer is a symbol buffer in dependence upon said parameter identifying that the buffer is a symbol buffer; and
means for causing transmitting of a symbol in accordance with the symbol buffer

6. A controller host interface according to any one of claims 1 to 4, comprising:
a circuit configured to search buffer configuration data of a set of buffers, to determine whether a buffer is a symbol buffer in dependence upon said parameter identifying that the buffer is a symbol buffer and to cause transmitting of a symbol in accordance with the symbol buffer.

7. A controller host interface according any claim 5 or 6, wherein said set of buffers include at least one symbol buffer and at least one transmit and/or receive buffer and, optionally, a synchronization frame information buffer.

8. A FlexRay communications controller comprising:
a controller host interface according to any preceding claim; and
a FlexRay protocol controller.

9. A microcontroller comprising:
a communications controller according to claim 8; and
at least one central processing unit (CPU).

10. A method of controlling buffers by a controller host interface of a FlexRay communications controller, the method comprising:
using a data structure which comprises configuration data specifying parameters defining a buffer, the configuration data including a parameter identifying that the buffer is a symbol buffer or a synchronization frame buffer.

11. A method according to claim 12, comprising:
receiving a set of parameters for writing into the buffer;
determining that the set of parameters are to be written into the buffer; and
writing the set of parameters into the buffer, including the parameter identifying that the buffer is a symbol buffer.

12. A method according to claim 11, wherein the parameter is configurable to identify that the buffer is a transmit buffer, a receive buffer or a symbol buffer and/or a synchronisation frame information.

13. A method according to claim 11 or 12, comprising:
searching buffer configuration data of a set of buffers;
determining whether the buffer is a symbol buffer in dependence upon said parameter identifying that the buffer is a symbol buffer;
causing transmitting of a symbol in accordance with the symbol buffer.

14. A method according to claim 13, wherein said set of buffers include at least one symbol buffer and at least one transmit and/or receive buffer.

15. A data structure for use by a channel host interface of a FlexRay communications controller, the data structure comprising configuration data specifying parameters defining a buffer, the configuration data including:
a parameter identifying that the buffer is a symbol buffer or a synchronization frame information buffer.

16. A data structure according to claim 15, wherein the configuration data further includes:
a parameter identifying a channel; and
a parameter identifying a communications cycle which includes a segment for data exchange and a segment for extended information exchange.
